# EUROPEAN PATENT SPECIFICATION

(11) **EP 1 827 092 B1**
(45) Date of publication and mention of the grant of the patent: **29.12.2010**
(21) Application number: 05789299.4
(22) Date of filing: 23.09.2005
(51) Int. Cl.: A01M 1/04

(54) **INSECT TRAP**
INSEKTENFALLE
PIEGE A INSECTES

(30) Priority: 26.11.2004 GB 0425939
(43) Date of publication of application: 05.09.2007
(73) Proprietor: Killgerm Group Limited, Ossett West Yorkshire WF5 9NA (GB)
(72) Inventor: GREENING, John, Kinlet Worcestershire DY12 3DW (GB)
(74) Representative: Craven, Ian
(86) International application number: PCT/GB2005/003687
(87) International publication number: WO 2006/056729

(56) References cited:
- EP-A- 0 934 698
- WO-A-96/28749
- GB-A- 2 118 815
- US-A- 5 327 675
- US-A- 6 112 453
- US-A1- 2005 028 430

## Description

The present invention relates to a device and method for disabling insects using pulsed emission from light emitting diodes.

Insects are capable of spreading bacteria and dirt and in most circumstances are regarded as pests. Many of these insects are flying insects such as flies. The population of flying insects needs to be controlled particularly in locations where hygiene is paramount such as hospitals, restaurants and other places where food is being prepared or people are being medically treated.

It is known to provide a source of ultraviolet (UV) electromagnetic radiation to attract insects (especially flying insects) into a location at which they are disabled (eg captured and/or killed). Due to their cost effectiveness, fluorescent tubes are the most common source of UV electromagnetic radiation for this purpose and devices containing fluorescent tubes are generally wall mounted or suspended from a suitable point. In order to disable the insect, an electrical current may be used to kill them or a sticky surface may be used to capture them. US-A-5327675 discloses a semiochemical field trap for blood feeding arthropods.

For reasons of energy efficiency, there has been an increasing trend to incorporate high frequency electronic ballasts to power fluorescent tubes. These are capable of operating at efficiencies of over 90%. They have in-built power factor (pf) correction circuitry which eliminates the need for pf correction capacitors when large numbers of lamps are deployed. When a fluorescent lamp is powered from domestic mains voltage, there is a tendency for the lamp to flicker at twice the mains frequency. It is known that at this domestic flicker frequency, insects are more attracted to normal UV fluorescent tubes when operated from a normal domestic supply of electricity than to a high frequency or DC operated lamp. In certain circumstances, flickering is considered to be disadvantageous.

The present invention is based on the recognition that low voltage, high intensity pulsed electromagnetic radiation from a light emitting diode (LED) may be exploited at relatively low power to attract insects.

According to one aspect the present invention provides an insect disablement device comprising the features of claim 1.

By using a light emitting diode in pulsed mode, the peak emissive power of the light emitting diode may advantageously be exploited to attract insects. The use of pulsed electromagnetic radiation allows a higher peak intensity of electromagnetic radiation to be emitted for the same average power input than that of a constant emission.

At least one (preferably all) of the one or more light emitting diodes is adapted to emit pulsed electromagnetic radiation at one or more wavelengths. Preferably the pulses of the pulsed electromagnetic radiation are substantially invisible to the human eye. This may be achieved at low power and/or by a suitable pulse frequency and pulse length. In this embodiment, there is advantageously minimal discomfort to humans in the locality of the device.

At least one (preferably all) of the one or more light emitting diodes is adapted to emit pulsed electromagnetic radiation at one or more wavelengths shorter than 650nm. Preferably at least one (preferably all) of the one or more light emitting diodes is adapted to emit pulsed UV radiation. At least one (preferably all) of the one or more light emitting diodes is adapted to emit pulsed electromagnetic radiation at one or more wavelengths longer than 320nm. Preferably at least one (preferably all) of the one or more light emitting diodes is adapted to emit pulsed electromagnetic radiation at one or more wavelengths shorter than 570nm.

At least one (preferably all) of the one or more light emitting diodes is adapted to emit pulsed electromagnetic radiation at one or more wavelengths in the range 320 to 400nm.

The one or more light emitting diodes are preferably a plurality of light emitting diodes. For example the device may comprise several hundred light emitting diodes. In a preferred embodiment, the plurality of light emitting diodes are clustered. Particularly preferably the device of the invention comprises one or more discrete clusters of one or more light emitting diodes adapted to emit pulsed electromagnetic radiation.

The one or more light emitting diodes may be adapted to emit regular or irregular pulsed electromagnetic radiation. Preferably at least one (preferably all) of the one or more light emitting diodes is adapted to pulse regularly (ie in a regular sequence of pulse cycles). The sequence of pulse cycles of different light emitting diodes may be adapted to interact in different ways. For example the plurality of light emitting diodes may be adapted to emit pulsed electromagnetic radiation substantially simultaneously, cyclically or sequentially. The plurality of light emitting diodes may be adapted to emit pulsed electromagnetic radiation to generate a beat frequency.

The one or more light emitting diodes may be made to pulse by using a suitable power source ie the intensity of electromagnetic radiation emitted from the one or more light emitting diodes may be made to vary with time. Preferably the frequency of pulsed electromagnetic radiation is in the range 5Hz to 800Hz, particularly preferably 5Hz to 200Hz, especially preferably 20Hz to 200Hz.

The or each light emitting diode is adapted (*eg* via a pulsed power supply) to emit pulsed electromagnetic radiation at a peak intensity for a proportion of the time of a pulse cycle and at a less than peak intensity (*eg* at zero intensity) for the remainder of the time of the pulse cycle. The proportion of time that a light emitting diode may emit pulsed electromagnetic radiation at a peak intensity in a pulse cycle may vary from pulse cycle to pulse cycle or between different light emitting diodes. The proportion of time in a pulse cycle that a light emitting diode emits a peak intensity of electromagnetic radiation is in the range 0.1% to 50%, more preferably 0.1 % to 20%, especially preferably 0.1% to 5%.

The one or more light emitting diodes may each be adapted to emit pulsed electromagnetic radiation substantially in a predetermined direction (typically away from the body of the housing). For this purpose, the electromagnetic radiation may be emitted in a narrow beam. Preferably the plurality of light emitting diodes emit pulsed electromagnetic radiation substantially in a respective plurality of predetermined directions. In this embodiment, electromagnetic radiation may be spatially emitted substantially uniformly by the plurality of light emitting diodes over a broad range. For example, the plurality of light emitting diodes may be arranged to project light substantially uniformly over a solid angle of the local environment. For example, the plurality of light emitting diodes may be arranged hemispherically (eg mounted on a substantially hemispherical surface) and adapted to emit pulsed electromagnetic radiation in substantially all radial directions from the hemisphere. For example, the plurality of light emitting diodes may be planarly (eg mounted on a substantially planar surface) and adapted to emit pulsed electromagnetic radiation over a range of deflection with respect to a polar normal vector of the surface. For example the range of deflection from the normal may be 5 to 60°.

The insect disablement device may further comprise one or more non-diode emitters adapted to emit electromagnetic radiation (eg pulsed electromagnetic radiation) at one or more wavelengths which are capable of attracting the insect. The one or more non-diode emitters may be fluorescent (eg a fluorescent tube). Preferably the one or more non-diode emitters are UV emitters.

The insect disablement housing may be adapted to capture and/or kill insects. For this purpose, the insect disablement housing generally comprises a disablement element. The disablement element may be an electrifiable surface such as a grille, mesh or grating which is connectable to an electrical power source to electrocute the insect. Alternatively the disablement element may be an adherent surface to capture the insect. The adherent surface may be replaceable.

The insect disablement housing may adopt a substantially box-like configuration. The insect disablement housing may comprise a top wall, a bottom wall and a first and second side wall which together form a framework. The one or more light emitting diodes may be mounted on one or more of the top wall, bottom wall, first side wall and second side wall. A safety cage may be mounted between the top wall and the bottom wall and may extend frontwardly and rearwardly. The housing may define an internal chamber at the lower end of which may be retained an insect catch tray for catching disabled insects. The insect catch tray may be detachable.

The one or more light emitting diodes are mounted in and/or on the insect disablement housing. Preferably at least one (eg a cluster or clusters) of the one or more light emitting diodes is mounted on the exterior of the first side wall and/or second side wall. Preferably at least one (eg a cluster or clusters) of the one or more light emitting diodes is mounted on the exterior of the bottom wall. Preferably at least one (eg a cluster or clusters) of the one or more light emitting diodes is mounted on the interior of the top wall.

The device may be used to attract a flying insect (eg a flying insect selected from the group consisting of a fly, wasp, midge and mosquito).

According to a further aspect the present invention provides a method for disabling an insect comprising the steps of:
exposing the insect to a pulse of electromagnetic radiation from a flying insect disablement device as claimed in one of claims 1-16 and
disabling the insect.

The present invention will now be described by way of example only, with reference to the accompanying figures in which:
Figure 1 is a front elevation of the device according to an embodiment of the present invention;
Figure 2 is a cross section of a side elevation of the device shown in figure 1;
Figure 3 is a side elevation of a light emitting diode cluster as shown in figure 1; and
Figure 4 is a plan view of a light emitting diode cluster as shown in figure 1.

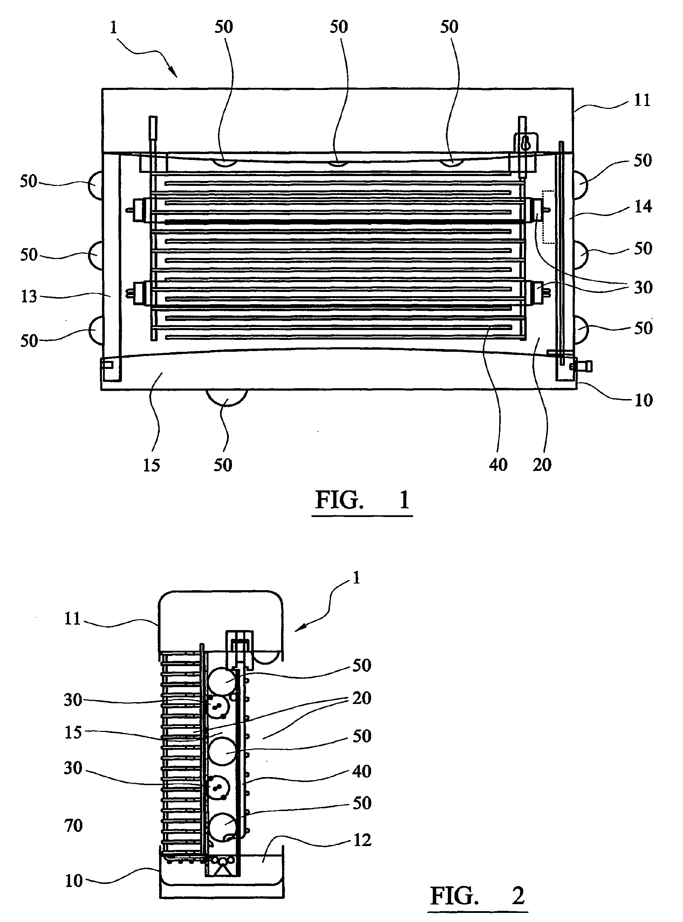

Figures 1 and 2 show a device (1) according to an embodiment of the present invention for disabling insects which comprises a top wall (11), a bottom wall (10) and a left and right side wall (13, 14) which together form a frame (15). Mounted between the top wall (11) and the bottom wall (10) and attached to the frame (15) is a safety cage (70). The safety cage (70) extends to the front and back of the device (1) but it is not shown at the front of the device in figure 2 to enable the inner workings of the device (1) to be seen. The extremity of the safety cage (70) defines an internal chamber (20).

Mounted horizontally in the internal chamber (20) are fluorescent tubes (30) adapted to emit ultraviolet electromagnetic radiation. Also mounted in the chamber (20) is an electrified grille (40) powered by an electrical source which is adapted to produce sufficient current to kill or disable any insect which contacts the grille (40). An opening in the bottom wall (10) is adapted to receive an insect catch tray (12) which collects insects killed in this way.

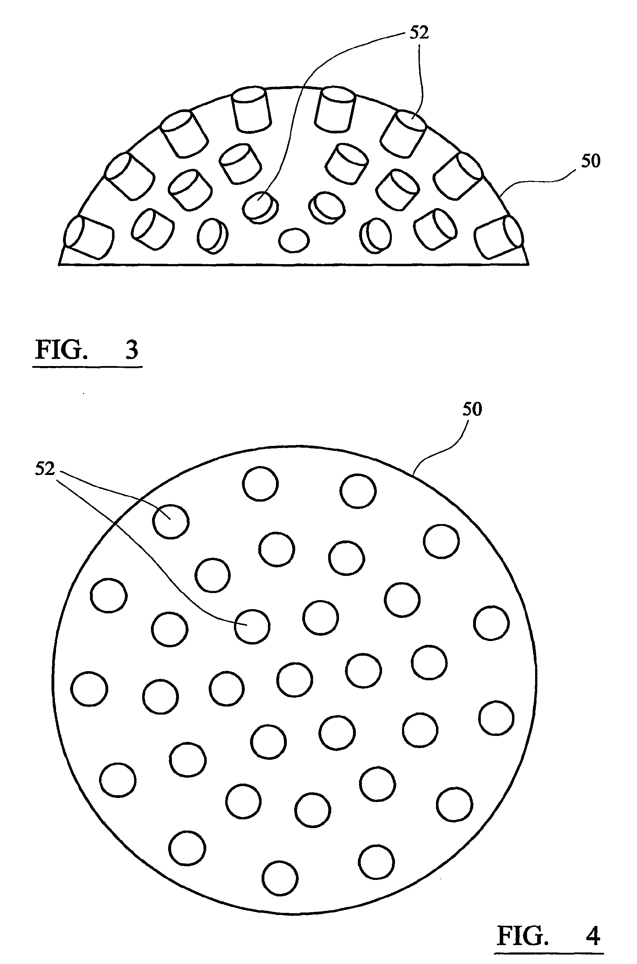

Mounted on various parts of the device are clusters (50) of light emitting diodes (52). Each of these clusters (50) comprises several light emitting diodes (52). Figures 3 and 4 show (in side and plan view respectively) a close-up of a light emitting diode cluster (50) in accordance with an embodiment of the device of the invention. The plurality of light emitting diodes (52) are arranged in a substantially hemispherical configuration to allow electromagnetic radiation to be emitted over a significant proportion of the solid angle extending from the cluster (50). Clusters (50) are mounted on the exterior of the left side wall (13) and right side wall (14), on the exterior of the bottom wall (10) and on the interior of the top wall (11).

In use, the fluorescent tubes (30) and light emitting diode clusters (50) attract insects towards the device (1). The configuration of the light emitting diode clusters (50) is such that they collectively emit pulsed electromagnetic radiation in substantially all directions away from the device. The fluorescent tubes (30) project light mainly in front and behind of the device. As insects are attracted to the device, they fly through the safety cage (70) into the chamber (20) and contact the electrified grille (40) where they are disabled and fall into the insect catch tray (12). The device may be mounted on a wall or may be suspended vertically from a ceiling or fixture. If suspended, the device may be attached by suitable connectors such as wires or chains from the frame (15) to the ceiling or fixture. An electrical power source (not shown) is also required to operate the device.

## Claims

1. A flying insect disablement device (1) comprising:
an insect disablement housing adapted to disable a flying insect; and
one or more light emitting diodes (52) adapted to emit pulsed electromagnetic radiation at one or more wavelengths in the range 320nm to 400nm which are capable of attracting the flying insect, wherein the one or more light emitting diodes are adapted to emit pulsed electromagnetic radiation at a peak intensity for a proportion of the time of a pulse cycle and at a less than peak intensity for the remainder of the time of the pulse cycle, wherein the proportion of time in a pulse cycle that a light emitting diode emits the peak intensity is in the range 0.1% to 50% and the one or more LEDs are mounted in and/or on the insect disablement housing such as to visually expose the flying insect to the pulsed electromagnetic radiation.

2. A flying insect disablement device (1) as claimed in claim 1 wherein the pulses of the pulsed electromagnetic radiation are substantially invisible to the human eye.

3. A flying insect disablement device (1) as claimed in claim 1 or 2 wherein at least one of the one or more light emitting diodes (52) is adapted to emit pulsed electromagnetic radiation at one or more wavelengths shorter than 650nm.

4. A flying insect disablement device (1) as claimed in claim 1 or 2 wherein at least one of the one or more light emitting diodes (52) is adapted to emit pulsed UV radiation.

5. A flying insect disablement device (1) as claimed in claim 1 or 2 wherein at least one of the one or more light emitting diodes (52) is adapted to emit pulsed electromagnetic radiation at one or more wavelengths longer than 320nm.

6. A flying insect disablement device (1) as claimed in claim 1 or 2 wherein at least one of the one or more light emitting diodes (52) is adapted to emit pulsed electromagnetic radiation at one or more wavelengths shorter than 570nm.

7. A flying insect disablement device (1) as claimed in any preceding claim wherein the one or more light emitting diodes (52) are a plurality of light emitting diodes.

8. A flying insect disablement device (1) as claimed in claim 7 wherein the plurality of light emitting diodes (52) are clustered.

9. A flying insect disablement device (1) as claimed in claim 8 comprising one or more discrete clusters (50) of one or more light emitting diodes (52) adapted to emit pulsed electromagnetic radiation.

10. A flying insect disablement device (1) as claimed in any preceding claim wherein the frequency of pulsed electromagnetic radiation is in the range 5Hz to 800Hz, particularly preferably 5Hz to 200Hz, especially preferably 20Hz to 200Hz.

11. A flying insect disablement device (1) as claimed in any preceding claim wherein the proportion of time in a pulse cycle that a LED emits the peak intensity is in the range 0.1 % to 20%, especially preferably 0.1% to 5%.

12. A flying insect disablement device (1) as claimed in any preceding claim wherein the one or more light emitting diodes (52) are adapted to emit electromagnetic radiation substantially uniformly over a solid angle of the local environment.

13. A flying insect disablement device (1) as claimed in claim 12 wherein a plurality of light emitting diodes (52) are arranged hemispherically and adapted to emit pulsed electromagnetic radiation in substantially all radial directions.

14. A flying insect disablement device (1) as claimed in claim 12 wherein the plurality of light emitting diodes (52) are arranged planarly and adapted to emit pulsed electromagnetic radiation over a range of deflection with respect to a polar normal vector of the surface, wherein the range of deflection is in the range 5 to 60°.

15. A flying insect disablement device (1) as claimed in any preceding claim further comprising one or more non-diode emitters (30) adapted to emit electromagnetic radiation at one or more wavelengths which are capable of attracting the insect.

16. A flying insect disablement device (1) as claimed in any preceding claim wherein the insect disablement housing comprises a top wall (11), a bottom wall (10), a first side wall (13) and a second side wall (14), wherein at least one of the one or more light emitting diodes (52) is mounted on the exterior of the first side wall and/or second side wall, at least one of the one or more light emitting diodes is mounted on the exterior of the bottom wall and at least one of the one or more light emitting diodes is mounted on the interior of the top wall.

17. A method for disabling a flying insect comprising the steps of:
exposing the insect to a pulse of electromagnetic radiation from a flying insect disablement device (1) as claimed in any preceding claim; and
disabling the insect.

## Patentansprüche

1. Vorrichtung (1) zum Unschädlichmachen eines fliegenden Insekts, umfassend:
ein Gehäuse zum Unschädlichmachen eines Insekts, welches ausgestaltet ist, ein fliegendes Insekt unschädlich zu machen; und
eine oder mehrere lichtaussendende Dioden (52), welche ausgestaltet sind, eine gepulste elektromagnetische Strahlung bei einer oder mehreren Wellenlängen in dem Bereich von 320 nm bis 400 nm auszusenden, welche in der Lage sind, das fliegende Insekt anzuziehen, wobei die eine oder die mehreren lichtaussendenden Dioden ausgestaltet sind, eine gepulste elektromagnetische Strahlung für einen Anteil der Zeit eines Impulszyklus mit einer Spitzenintensität und für den Rest der Zeit des Impulszyklus mit einer geringeren als der Spitzenintensität auszusenden, wobei der Anteil der Zeit in einem Impulszyklus, in welchem eine lichtaussendende Diode die Spitzenintensität aussendet, in dem Bereich von 0,1 bis 50 % liegt, und wobei die eine oder mehreren LEDs in und/oder auf dem Gehäuse zum Unschädlichmachen des Insekts derart angebracht sind, dass sie das fliegende Insekt der gepulsten elektromagnetischen Strahlung optisch aussetzen.

2. Vorrichtung (1) zum Unschädlichmachen eines fliegenden Insekts nach Anspruch 1, wobei die Impulse der gepulsten elektromagnetischen Strahlung für das menschliche Auge im Wesentlichen unsichtbar sind.

3. Vorrichtung (1) zum Unschädlichmachen eines fliegenden Insekts nach Anspruch 1 oder 2, wobei mindestens eine der einen oder mehreren lichtaussendenden Dioden (52) ausgestaltet ist, eine gepulste elektromagnetische Strahlung bei einer oder mehreren Wellenlängen kürzer als 650 nm auszusenden.

4. Vorrichtung (1) zum Unschädlichmachen eines fliegenden Insekts nach Anspruch 1 oder 2, wobei mindestens eine der einen oder mehreren lichtaussendenden Dioden (52) ausgestaltet ist, eine gepulste UV-Strahlung auszusenden.

5. Vorrichtung (1) zum Unschädlichmachen eines fliegenden Insekts nach Anspruch 1 oder 2, wobei mindestens eine der einen oder mehreren lichtaussendenden Dioden (52) ausgestaltet ist, eine gepulste elektromagnetische Strahlung bei einer oder mehreren Wellenlängen länger als 320 nm auszusenden.

6. Vorrichtung (1) zum Unschädlichmachen eines fliegenden Insekts nach Anspruch 1 oder 2, wobei mindestens eine der einen oder mehreren lichtaussendenden Dioden (52) ausgestaltet ist, eine gepulste elektromagnetische Strahlung bei einer oder mehreren Wellenlängen kürzer als 570 nm auszusenden.

7. Vorrichtung (1) zum Unschädlichmachen eines fliegenden Insekts nach einem der vorhergehenden Ansprüche, wobei die eine oder mehreren lichtaussendenden Dioden (52) mehrere lichtaussendende Dioden sind.

8. Vorrichtung (1) zum Unschädlichmachen eines fliegenden Insekts nach Anspruch 7, wobei die mehreren lichtaussendenden Dioden (52) gehäuft angeordnet sind.

9. Vorrichtung (1) zum Unschädlichmachen eines fliegenden Insekts nach Anspruch 8, umfassend eine oder mehrere getrennte Häufungen (50) von einer oder mehreren lichtaussendenden Dioden (52), welche ausgestaltet sind, eine gepulste elektromagnetische Strahlung auszusenden.

10. Vorrichtung (1) zum Unschädlichmachen eines fliegenden Insekts nach einem der vorhergehenden Ansprüche, wobei die Frequenz der gepulsten elektromagnetischen Strahlung in dem Bereich von 5 Hz bis 800 Hz, insbesondere vorzugsweise von 5 Hz bis 200 Hz, insbesondere vorzugsweise 20 Hz bis 200 Hz liegt.

11. Vorrichtung (1) zum Unschädlichmachen eines fliegenden Insekts nach einem der vorhergehenden Ansprüche, wobei der Anteil der Zeit in einem Impulszyklus, zu dem eine LED die Spitzenintensität aussendet, in dem Bereich 0,1 % bis 20%, insbesondere vorzugsweise 0,1 % bis 5 % liegt.

12. Vorrichtung (1) zum Unschädlichmachen eines fliegenden Insekts nach einem der vorhergehenden Ansprüche, wobei die eine oder mehreren lichtaussendenden Dioden (52) ausgestaltet sind, eine elektromagnetische Strahlung im Wesentlichen einheitlich über einen festen Winkel der lokalen Umgebung auszusenden.

13. Vorrichtung (1) zum Unschädlichmachen eines fliegenden Insekts nach Anspruch 12, wobei mehrere lichtaussendende Dioden (52) hemisphärisch angeordnet sind und ausgestaltet sind, eine gepulste elektromagnetische Strahlung im Wesentlichen in alle Richtungen auszusenden.

14. Vorrichtung (1) zum Unschädlichmachen eines fliegenden Insekts nach Anspruch 12, wobei die mehreren lichtaussendenden Dioden (52) plan angeordnet sind und ausgestaltet sind, eine gepulste elektromagnetische Strahlung über einen Ablenkungsbereich bezogen auf einen polaren Normalvektor der Fläche auszusenden, wobei der Ablenkungsbereich in dem Bereich von 5 bis 60° liegt.

15. Vorrichtung (1) zum Unschädlichmachen eines fliegenden Insekts nach einem der vorhergehenden Ansprüche, ferner umfassend einen oder mehrere nicht-Diodensender (30), welche ausgestaltet sind, eine elektromagnetische Strahlung bei einer oder mehreren Wellenlängen auszusenden, welche in der Lage sind, das Insekt anzuziehen.

16. Vorrichtung (1) zum Unschädlichmachen eines fliegenden Insekts nach einem der vorhergehenden Ansprüche, wobei das Gehäuse zum Unschädlichmachen des Insekts eine Oberseitenwand (11), eine Bodenwand (10), eine erste Seitenwand (13) und eine zweite Seitenwand (14) umfasst, wobei mindestens eine der einen oder mehreren lichtaussendenden Dioden (52) an der Außenseite der ersten Seitenwand und/oder zweiten Seitenwand angebracht ist, wobei mindestens eine der einen oder mehreren lichtaussendenden Dioden an der Außenseite der Bodenwand angebracht ist und mindestens eine der einen oder mehreren lichtaussendenden Dioden an der Innenseite der Oberseitenwand angebracht ist.

17. Verfahren zum Unschädlichmachen eines fliegenden Insekts, umfassend die Schritte:
Aussetzen des Insekts einem Impuls einer elektromagnetischen Strahlung von einer Vorrichtung (1) zum Unschädlichmachen eines fliegenden Insekts nach einem der vorhergehenden Ansprüche; und
Unschädlichmachen des Insekts.

## Revendications

1. Dispositif de neutralisation d'insecte volant (1) comprenant :
un logement de neutralisation d'insecte adapté pour neutraliser un insecte volant ; et
une ou plusieurs diodes électroluminescentes (52) adaptées pour émettre un rayonnement électromagnétique pulsé à une ou plusieurs longueurs d'onde dans la plage de 320 nm à 400 nm qui sont capables d'attirer l'insecte volant, où la ou les diodes électroluminescentes sont adaptées pour émettre un rayonnement électromagnétique pulsé à une intensité pic pendant une proportion du temps d'un cycle d'impulsion et à moins qu'une intensité pic pendant le reste du temps du cycle d'impulsion, où la proportion du temps dans un cycle d'impulsion pendant lequel une diode électroluminescente émet l'intensité pic est dans la plage de 0,1 % à 50 % et la ou les DEL sont montées dans et/ou sur le logement de neutralisation d'insecte de façon à exposer visuellement l'insecte volant au rayonnement électromagnétique pulsé.

2. Dispositif de neutralisation d'insecte volant (1) selon la revendication 1, dans lequel les impulsions du rayonnement électromagnétique pulsé sont sensiblement invisibles à l'oeil nu.

3. Dispositif de neutralisation d'insecte volant (1) selon la revendication 1 ou 2, dans lequel au moins une de la ou des diodes électroluminescentes (52) est adaptée pour émettre un rayonnement électromagnétique pulsé à une ou plusieurs longueurs d'onde plus courtes que 650 nm.

4. Dispositif de neutralisation d'insecte volant (1) selon la revendication 1 ou 2, dans lequel au moins une de la ou des diodes électroluminescentes (52) est adaptée pour émettre un rayonnement UV pulsé.

5. Dispositif de neutralisation d'insecte volant (1) selon la revendication 1 ou 2, dans lequel au moins une de la ou des diodes électroluminescentes (52) est adaptée pour émettre un rayonnement électromagnétique pulsé à une ou plusieurs longueurs d'onde plus longues que 320 nm.

6. Dispositif de neutralisation d'insecte volant (1) selon la revendication 1 ou 2, dans lequel au moins une de la ou des diodes électroluminescentes (52) est adaptée pour émettre un rayonnement électromagnétique pulsé à une ou plusieurs longueurs d'onde plus courtes que 570 nm.

7. Dispositif de neutralisation d'insecte volant (1) selon l'une quelconque des revendications précédentes, dans lequel la ou les diodes électroluminescentes (52) sont une pluralité de diodes électroluminescentes.

8. Dispositif de neutralisation d'insecte volant (1) selon la revendication 7, dans lequel les diodes électroluminescentes (52) de la pluralité sont regroupées.

9. Dispositif de neutralisation d'insecte volant (1) selon la revendication 8, comprenant un ou plusieurs regroupements discrets (50) d'une ou plusieurs diodes électroluminescentes (52) adaptées pour émettre un rayonnement électromagnétique pulsé.

10. Dispositif de neutralisation d'insecte volant (1) selon l'une quelconque des revendications précédentes, dans lequel la fréquence de rayonnement électromagnétique pulsé est dans la plage de 5 Hz à 800 Hz, de manière particulièrement préférée de 5 Hz à 200 Hz, et de manière spécialement préférée de 20 Hz à 200 Hz.

11. Dispositif de neutralisation d'insecte volant (1) selon l'une quelconque des revendications précédentes, dans lequel la proportion de temps dans un cycle d'impulsion pendant lequel une DEL émet l'intensité pic est dans la plage de 0,1 % à 20 %, de manière spécialement préférée de 0,1 % à 5 %.

12. Dispositif de neutralisation d'insecte volant (1) selon l'une quelconque des revendications précédentes, dans lequel la ou les diodes électroluminescentes (52) sont adaptées pour émettre un rayonnement électromagnétique de manière sensiblement uniforme sur un angle solide de l'environnement local.

13. Dispositif de neutralisation d'insecte volant (1) selon la revendication 12, dans lequel une pluralité de diodes électroluminescentes (52) sont agencées hémisphériquement et adaptées pour émettre un rayonnement électromagnétique pulsé dans quasiment toutes les directions radiales.

14. Dispositif de neutralisation d'insecte volant (1) selon la revendication 12, dans lequel les diodes électroluminescentes (52) de la pluralité sont agencées de façon plane et adaptées pour émettre un rayonnement électromagnétique pulsé sur une gamme de déflexion par rapport à un vecteur normal polaire de la surface, où la plage de déflexion est de 5 à 60°.

15. Dispositif de neutralisation d'insecte volant (1) selon l'une quelconque des revendications précédentes, comprenant en outre un ou plusieurs émetteurs non-diode (30) adaptés pour émettre un rayonnement électromagnétique à une ou plusieurs longueurs d'onde qui sont capables d'attirer l'insecte.

16. Dispositif de neutralisation d'insecte volant (1) selon l'une quelconque des revendications précédentes, dans lequel le logement de neutralisation d'insecte comprend une paroi supérieure (11), une paroi inférieure (10), une première paroi latérale (13) et une seconde paroi latérale (14), où au moins l'une de la ou des diodes électroluminescentes (52) est montée sur l'extérieur de la première paroi latérale et/ou de la seconde paroi latérale, au moins l'une de la ou des diodes électroluminescentes est montée sur l'extérieur de la paroi inférieure et au moins l'une de la ou des diodes électroluminescentes est montée sur l'intérieur de la paroi supérieure.

17. Procédé de neutralisation d'un insecte volant comprenant les étapes consistant à :
exposer l'insecte à une impulsion de rayonnement électromagnétique à partir d'un dispositif de neutralisation d'insecte volant (1) tel que revendiqué dans l'une quelconque des revendications précédentes ; et
neutraliser l'insecte.
